# EUROPEAN PATENT SPECIFICATION

(11) **EP 4 108 528 B1**
(45) Date of publication and mention of the grant of the patent: **22.04.2026**
(21) Application number: 21709469.7
(22) Date of filing: 03.02.2021
(51) Int. Cl.: B60T 8/17, B60T 8/1755, B60W 50/16, B60T 8/26, B60T 8/32

(54) **CONTROL DEVICE AND CONTROL METHOD**
STEUERUNGSVORRICHTUNG UND STEUERUNGSVERFAHREN
DISPOSITIF DE COMMANDE ET PROCÉDÉ DE COMMANDE

(30) Priority: 17.02.2020 JP 2020024205
(43) Date of publication of application: 28.12.2022
(73) Proprietor: Robert Bosch GmbH, 70442 Stuttgart (DE)
(72) Inventor: SATO, Akira, Yokohama-shi,, Kanagawa 224-8501 (JP)
(86) International application number: PCT/IB2021/050859
(87) International publication number: WO 2021/165774

(56) References cited:
- EP-A1- 3 608 181
- EP-A1- 3 730 391
- WO-A1-2019/025886
- WO-A1-2021/161135

## Description

### Technical Field

The present invention relates to a controller and a control method for a rider-assistance system that is mounted to a straddle-type vehicle.

### Background Art

A technique of providing a warning to a rider of a straddle-type vehicle by haptic motion has been known. During travel of the straddle-type vehicle, a controller determines necessity of the warning. When determining that the warning is necessary, the controller performs the haptic motion at least once to reduce or increase acceleration/deceleration of the straddle-type vehicle only for a moment.

### Citation List

### Patent Literature

PTL 1: WO 2018/185577. The document PTL 1 discloses a control device, a control method and a brake system for a motorcycle that implements an automatic emergency deceleration operation, based on trigger information about the motorcycle and its environment (e.g. the presence of an obstacle against which the motorcycle could collide). The control method comprises two notifications. A first notification informs the driver that an emergency deceleration operation is to be performed, without applying any force on the driver or the motorcycle. After the first notification, the driver has the opportunity to modify the trajectory of the motorcycle to avoid the collision. If this does happen, the second notification is suppressed. If this does not happen, in a second notification an emergency deceleration operation is executed to stop the motorcycle and avoid the collision.

### Summary of Invention

### Technical Problem

A wheelbase of the straddle-type vehicle is extremely short when compared to those of other vehicles (for example, an automobile, a truck, and the like). For this reason, travel safety can be deteriorated significantly even with a slight change in the acceleration/deceleration. In addition, like the conventional controller, in a specification that the same haptic motion is performed regardless of a state of the straddle-type vehicle at the time, it is necessary to set a change amount of the acceleration/deceleration as small as possible so that the travel safety is maintained even with the haptic motion being performed in a state where behavior is likely to become the least stable. As a result, perception of the warning by the rider possibly becomes insufficient.

The present invention has been made in view of the above-described problem as the background and therefore obtains a controller and a control method capable of improving a rider's perceptibility of a warning.

### Solution to Problem

A controller according to the present invention is a controller for a rider-assistance system that is mounted to a straddle-type vehicle including a front wheel and a rear wheel, and includes: a determination section that determines necessity of a warning that is given to a rider of the straddle-type vehicle during travel of the straddle-type vehicle; and a haptic motion performing section that performs haptic motion at least once by reducing or increasing acceleration/deceleration of the straddle-type vehicle only for a moment in the case where the determination section determines that the warning is necessary. The controller further includes an acquisition section that acquires travel state information of the straddle-type vehicle during the travel of the straddle-type vehicle. The travel state information is information with which appropriateness of each of the wheels for the haptic motion can be acknowledged. The haptic motion performing section changes a priority of each of the wheels at the time of changing a braking force to reduce or increase the acceleration/deceleration only for the moment in the haptic motion according to the travel state information that is acquired by the acquisition section.

A control method according to the present invention is a control method for a rider-assistance system that is mounted on a straddle-type vehicle including a front wheel and a rear wheel, and includes: a determination step in which a determination section of a controller determines necessity of a warning that is given to a rider of the straddle-type vehicle during travel of the straddle-type vehicle; and a haptic motion performing step in which a haptic motion performing section of the controller performs haptic motion at least once by reducing or increasing acceleration/deceleration of the straddle-type vehicle only for a moment in the case where it is determined in the determination step that the warning is necessary. The control method further includes an acquisition step in which an acquisition section of the controller acquires travel state information of the straddle-type vehicle during the travel of the straddle-type vehicle. The travel state information is information with which appropriateness of each of the wheels for the haptic motion can be acknowledged. In the haptic motion performing step, the haptic motion performing section changes a priority of each wheel at the time of changing a braking force to reduce or increase the acceleration/deceleration only for the moment in the haptic motion according to the travel state information that is acquired in the acquisition step.

### Advantageous Effects of Invention

In the controller and the control method according to the present invention, the haptic motion performing section changes the priority of each of the wheels at the time of changing the braking force to reduce or increase the acceleration/deceleration only for the moment in the haptic motion according to the travel state information of the straddle-type vehicle. Thus, even under a situation where travel safety of the straddle-type vehicle can be deteriorated significantly by a slight change in the acceleration/deceleration, the haptic motion with a large change amount of the acceleration/deceleration can be performed by preferentially using the wheel that has less impact on the travel safety than the other wheel. Therefore, it is possible to improve the rider's perceptibility of the warning.

### Brief Description of Drawings

Fig. 1 is a view illustrating a mounted state of a rider-assistance system according to an embodiment of the present invention to a straddle-type vehicle.
Fig. 2 is a diagram for illustrating a schematic configuration of the rider-assistance system according to the embodiment of the present invention.
Fig. 3 is a chart illustrating an example of a control flow by a controller in the rider-assistance system according to the embodiment of the present invention.

### Description of Embodiments

A description will hereinafter be made on a rider-assistance system according to the present invention with reference to the drawings.

A configuration, operation, and the like, which will be described below, merely constitute one example.

For example, a description will hereinafter be made on a case where the rider-assistance system according to the present invention is used for a two-wheeled motor vehicle. However, the rider-assistance system according to the present invention may be used for a straddle-type vehicle other than the two-wheeled motor vehicle. The straddle-type vehicle means a vehicle that a rider straddles. Examples of the straddle-type vehicle are motorcycles (the two-wheeled motor vehicle and a three-wheeled motor vehicle), an all-terrain vehicle, and a bicycle. Examples of the motorcycle are a motorbike, a scooter, and an electric scooter. The bicycle means a vehicle capable of traveling forward on a road by a depression force applied to pedals by the rider. The bicycles include a normal bicycle, an electrically-assisted bicycle, an electric bicycle, and the like.

The same or similar description will appropriately be simplified or will not be made below. In the drawings, the same or similar members or portions will be denoted by the same reference sign. In addition, a detailed structure will appropriately be illustrated in a simplified manner or will not be illustrated.

In addition, "acceleration/deceleration" in the present invention is a concept expressed such that acceleration has a positive value and deceleration has a negative value. That is, such expression that the "acceleration/deceleration is reduced" in the present invention means a state where the acceleration is reduced or a state where the deceleration is increased. Meanwhile, such expression that the "acceleration/deceleration is increased" in the present invention means a state where the acceleration is increased or a state where the deceleration is reduced.

Furthermore, an "up/down grade" in the present invention is a concept expressed such that a grade of an uphill has a positive value and a grade of a downhill has a negative value. That is, such expression that the "up/down grade is high" in the present invention means a state where the grade of the uphill is high or a state where the grade of the downhill is low. Meanwhile, such expression that the up/down grade is low" in the present invention means a state where the grade of the uphill is low or a state where the grade of the downhill is high.

### Embodiment

A description will hereinafter be made on a rider-assistance system according to an embodiment.

### <Configuration of Rider-Assistance System>

A description will be made on a configuration of the rider-assistance system according to the embodiment.

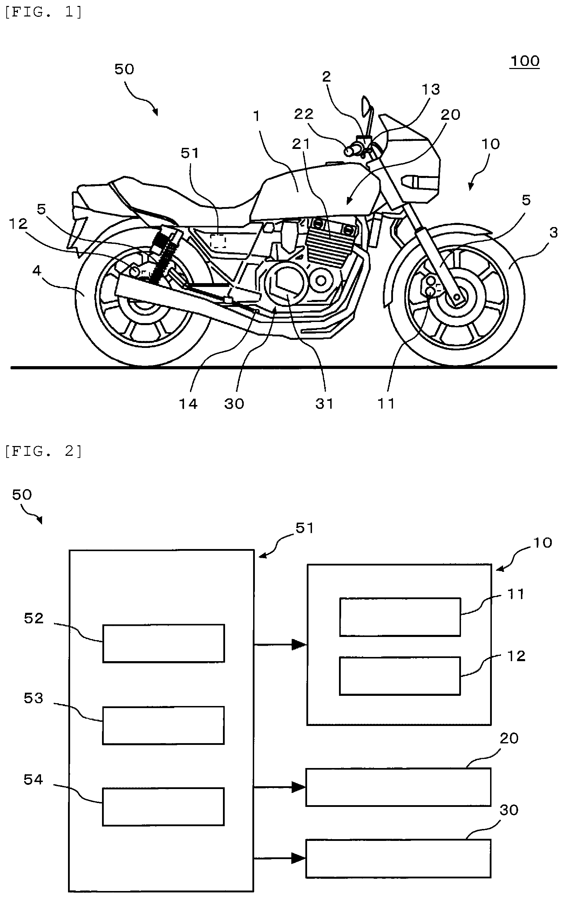

Fig. 1 is a view of a mounted state of the rider-assistance system according to the embodiment of the present invention to the straddle-type vehicle. Fig. 2 is a diagram for illustrating a schematic configuration of the rider-assistance system according to the embodiment of the present invention.

As illustrated in Fig. 1 and Fig. 2, a straddle-type vehicle 100 includes a trunk 1, a handlebar 2 that is held by the trunk 1 in a freely turnable manner, a front wheel 3 that is held by the trunk 1 in a freely turnable manner with the handlebar 2, a rear wheel 4 that is held by the trunk 1 in a freely rotatable manner, a brake system 10, a drive system 20, and a gearshift system 30. The straddle-type vehicle 100 also includes a rider-assistance system 50 that includes a controller 51.

The brake system 10 includes a front-wheel brake mechanism 11 for braking the front wheel 3 and a rear-wheel brake mechanism 12 for braking the rear wheel 4. When the rider operates an input section (for example, a brake lever 13) that corresponds to the front-wheel brake mechanism 11, with a force corresponding to an operation amount thereof, a brake pad (not illustrated) in the front-wheel brake mechanism 11 is pressed against a rotor (not illustrated) that rotates with the front wheel 3, and the front wheel 3 is thereby braked. Meanwhile, when the rider operates an input section (for example, a brake pedal 14) that corresponds to the rear-wheel brake mechanism 12, with a force corresponding to an operation amount thereof, a brake pad (not illustrated) in the rear-wheel brake mechanism 12 is pressed against a rotor (not illustrated) that rotates with the rear wheel 4, and the rear wheel 4 is thereby braked.

The controller 51 can separately control braking forces generated by the front-wheel brake mechanism 11 and the rear-wheel brake mechanism 12. For example, the controller 51 can reduce the braking force generated on the front wheel 3 by controlling the brake pad in the front-wheel brake mechanism 11 to separate from the rotor. Meanwhile, the controller 51 can increase the braking force generated on the front wheel 3 by controlling the brake pad in the front-wheel brake mechanism 11 to be brought close to the rotor. In addition, the controller 51 can reduce the braking force generated on the rear wheel 4 by controlling the brake pad in the rear-wheel brake mechanism 12 to separate from the rotor. Meanwhile, the controller 51 can increase the braking force generated on the rear wheel 4 by controlling the brake pad in the rear-wheel brake mechanism 12 to be brought close to the rotor. That is, the controller 51 can control acceleration/deceleration of the straddle-type vehicle 100 by controlling the braking forces generated on the front wheel 3 and the rear wheel 4. Furthermore, the controller 51 can control distribution of changes in the braking forces generated on the front wheel 3 and the rear wheel 4.

The drive system 20 transmits output of a drive source (for example, an engine, a motor, or the like) 21 to the gearshift system 30. When the rider operates an input section (for example, an accelerator grip 22), output corresponding to an operation amount thereof is changed by the gearshift system 30 and is then transmitted to a drive wheel (for example, the rear wheel 4).

The controller 51 can control the output of the drive source 21 in the drive system 20. For example, the controller 51 can increase/reduce the output of the drive source 21 by controlling an opening degree of a throttle (not illustrated) . The controller 51 can also generate the braking force (so-called engine braking) on the drive wheel by controlling the throttle to be closed. That is, the controller 51 can control the acceleration/deceleration of the straddle-type vehicle 100 by controlling the output of the drive source 21. The controller 51 can also control the braking force that is generated on the drive wheel. When controlling the distribution of the changes in the braking forces generated on the front wheel 3 and the rear wheel 4, the controller 51 can control the drive system 20 instead of or in addition to the brake system 10.

The controller 51 can control a gear ratio of the gearshift system 30. For example, the controller 51 can increase the gear ratio by executing control to step down a selected stage of a multistage gearshift mechanism 31. Here, in the case where the gear ratio is increased in a state where the throttle is closed, the braking force (the so-called engine braking) that is generated on the drive wheel is increased. In addition, the controller 51 can reduce the gear ratio by executing control to step up the selected stage of the multistage gearshift mechanism 31. Here, in the case where the gear ratio is reduced in the state where the throttle is closed, the braking force (the so-called engine braking) that is generated on the drive wheel is reduced. That is, the controller 51 can control the acceleration/deceleration of the straddle-type vehicle 100 by controlling the gear ratio of the gearshift system 30. The controller 51 can also control the braking force that is generated on the drive wheel. When controlling the distribution of the changes in the braking forces generated on the front wheel 3 and the rear wheel 4, the controller 51 can control the gearshift system 30 instead of or in addition to the brake system 10.

The controller 51 includes a determination section 52 and a haptic motion performing section 53. The controller 51 may partially or entirely be constructed of a microcomputer, a microprocessor unit, or the like, may partially or entirely be constructed of a member in which firmware or the like can be updated, or may partially or entirely be a program module that is executed by a command from a CPU or the like, for example. The controller 51 may be provided as one unit or may be divided into multiple units, for example.

The determination section 52 determines necessity of a warning to be given to the rider of the straddle-type vehicle 100 during travel of the straddle-type vehicle 100. For example, the determination section 52 may determine the necessity of the warning on the basis of output of various sensors, each of which detects a state of the rider or each component of the straddle-type vehicle 100, may determine the necessity of the warning on the basis of output of a surrounding environment sensor that is mounted to the straddle-type vehicle 100, or may determine the necessity of the warning on the basis of information that is acquired via wireless communication with another vehicle or infrastructure equipment.

In the case where the determination section 52 determines that the warning is necessary, the haptic motion performing section 53 performs haptic motion at least once to reduce or increase the acceleration/deceleration of the straddle-type vehicle 100 only for a moment. The acceleration/deceleration after having been reduced or increased only for the moment may be equal to or may not be equal to the acceleration/deceleration prior to such reduction or increase. The haptic motion performing section 53 reduces or increases the acceleration/deceleration only for the moment by increasing or reducing the braking force on the wheel (the front wheel 3 or the rear wheel 4). An increased/reduced amount, a grade of the increase/reduction, and an interval of the increase/reduction are each set to a value with which the rider can perceive generation of the warning. The haptic motion may be performed in a state where the braking force is generated on each of the wheels, or may be performed in a state where the braking force is generated on none of the wheels.

Here, according to travel state information of the straddle-type vehicle 100 that is acquired by an acquisition section 54 during the travel of the straddle-type vehicle 100, the haptic motion performing section 53 changes priorities of the front wheel 3 and the rear wheel 4 at the time of increasing/reducing the braking force. The travel state information is information with which appropriateness of each of the wheels for the haptic motion can be acknowledged.

The haptic motion may be motion that changes the braking force of only one of the front wheel 3 and the rear wheel 4, or may be motion that changes the braking forces of both of the front wheel 3 and the rear wheel 4. In the case where the haptic motion is the motion that changes the braking force of only one of the front wheel 3 and the rear wheel 4, the haptic motion performing section 53 selects one of the front wheel 3 and the rear wheel 4, the braking force of which is changed in the haptic motion, according to the travel state information acquired by the acquisition section 54 and thereby changes the priorities. Meanwhile, in the case where the haptic motion is the motion that changes the braking forces of both of the front wheel 3 and the rear wheel 4, the haptic motion performing section 53 changes allocation of the change in the braking force generated on the front wheel 3 and the change in the braking force generated on the rear wheel 4 in the haptic motion according to the travel state information acquired by the acquisition section 54, and thereby changes the priorities.

As an example, the travel state information that is acquired by the acquisition section 54 includes information on the acceleration/deceleration that is generated in the straddle-type vehicle 100. Such information may be the information on the acceleration/deceleration itself that is generated in the straddle-type vehicle 100, or may be information on another state amount (for example, a pitch amount generated in the straddle-type vehicle 100, an expansion/compression amount generated on a suspension 5, or the like) that allows estimation of the acceleration/deceleration that is generated in the straddle-type vehicle 100. In the case where the information on the acceleration/deceleration is information on a state where the low acceleration/deceleration is generated in the straddle-type vehicle 100, in the haptic motion, the haptic motion performing section 53 preferably sets the priority of the front wheel 3 to be high in comparison with a case where the information on the acceleration/deceleration is information on a state where the high acceleration/deceleration is generated in the straddle-type vehicle 100.

That is, in the case where the haptic motion is the motion that changes the braking force of only one of the front wheel 3 and the rear wheel 4, and the information on the acceleration/deceleration is information on a state where the acceleration/deceleration that falls below reference acceleration/deceleration is generated in the straddle-type vehicle 100, the haptic motion performing section 53 changes only the braking force on the front wheel 3. In the case where the information on the acceleration/deceleration is information on a state where the acceleration/deceleration that exceeds the reference acceleration/deceleration is generated in the straddle-type vehicle 100, the haptic motion performing section 53 changes only the braking force on the rear wheel 4. Meanwhile, in the case where the haptic motion is the motion that changes the braking forces of both of the front wheel 3 and the rear wheel 4, and the information on the acceleration/deceleration is the information on the state where the low acceleration/deceleration is generated in the straddle-type vehicle 100, the haptic motion performing section 53 increases a ratio of the change in the braking force generated on the front wheel 3 to a sum of the changes in the braking forces generated on the front wheel 3 and the rear wheel 4 in comparison with a case where the information on the acceleration/deceleration is information on a state where the high acceleration/deceleration is generated in the straddle-type vehicle 100.

As an example, the travel state information that is acquired by the acquisition section 54 includes information on a slip degree that is generated on the wheel of the straddle-type vehicle 100. Such information may be the information on the slip degree itself that is generated on the wheel, or may be information on another state amount (for example, timing at which a wheel rotational frequency fluctuates, a fluctuation amount of the wheel rotational frequency, or the like) that allows estimation of the slip degree generated on the wheel. In the case where information on the slip degree is information on a state where the large slip degree is generated on the front wheel 3, in the haptic motion, the haptic motion performing section 53 preferably sets the priority of the rear wheel 4 to be high in comparison with a case where the information on the slip degree is information on a state where the small slip degree is generated on the front wheel 3. Meanwhile, in the case where information on the slip degree is information on a state where the large slip degree is generated on the rear wheel 4, in the haptic motion, the haptic motion performing section 53 preferably sets the priority of the front wheel 3 to be high in comparison with a case where the information on the slip degree is information on a state where the small slip degree is generated on the rear wheel 4.

That is, in the case where the haptic motion is the motion that changes the braking force of only one of the front wheel 3 and the rear wheel 4, and the information on the slip degree is information on a state where the slip degree that falls below a reference slip degree is generated on the front wheel 3, the haptic motion performing section 53 changes only the braking force on the front wheel 3. In the case where the information on the slip degree is information on a state where the slip degree that exceeds the reference slip degree is generated on the front wheel 3, the haptic motion performing section 53 changes only the braking force on the rear wheel 4. Meanwhile, in the case where information on the slip degree is information on a state where the slip degree that falls below the reference slip degree is generated on the rear wheel 4, the haptic motion performing section 53 changes only the braking force generated on the rear wheel 4. In the case where the information on the slip degree is information on a state where the slip degree that exceeds the reference slip degree is generated on the rear wheel 4, the haptic motion performing section 53 changes only the braking force generated on the front wheel 3. In addition, in the case where the haptic motion is the motion that changes the braking forces of both of the front wheel 3 and the rear wheel 4, and the information on the slip degree is the information on the state where the large slip degree is generated on the front wheel 3, the haptic motion performing section 53 increases a ratio of the change in the braking force generated on the rear wheel 4 to the sum of the changes in the braking forces generated on the front wheel 3 and the rear wheel 4 in comparison with a case where the information on the slip degree is the information on the state where the small slip degree is generated on the front wheel 3. Meanwhile, in the case where information on the slip degree is the information on the state where the large slip degree is generated on the rear wheel 4, the haptic motion performing section 53 increases the ratio of the change in the braking force generated on the front wheel 3 to the sum of the changes in the braking forces generated on the front wheel 3 and the rear wheel 4 in comparison with the case where the information on the slip degree is the information on the state where the small slip degree is generated on the rear wheel 4.

As an example, the travel state information that is acquired by the acquisition section 54 includes information on an up/down grade of a road on which the straddle-type vehicle 100 travels. Such information may be the information on the up/down grade itself of the road or may be information on another state amount (for example, an acceleration amount in a perpendicular direction to a road surface that is generated in the straddle-type vehicle 100, the expansion/compression amount generated on the suspension 5, or the like) that allows estimation of the up/down grade of the road. In the case where the information on the up/down grade is information on a state where the road has the high up/down grade, in the haptic motion, the haptic motion performing section 53 preferably sets the priority of the rear wheel 4 to be high in comparison with a case where the information on the up/down grade is information on a state where the road has the low up/down grade.

That is, in the case where the haptic motion is the motion that changes the braking force of only one of the front wheel 3 and the rear wheel 4, and the information on the up/down grade is information on a state where the road has the up/down grade that exceeds a reference up/down grade, the haptic motion performing section 53 only changes the braking force on the rear wheel 4. In the case where the information on the up/down grade is information on a state where the road has the up/down grade that falls below the reference up/down grade, the haptic motion performing section 53 only changes the braking force on the front wheel 3. Meanwhile, in the case where the haptic motion is the motion that changes the braking forces of both of the front wheel 3 and the rear wheel 4, and the information on the up/down grade is the information on the state where the road has the high up/down grade, the haptic motion performing section 53 increases the ratio of the change in the braking force generated on the rear wheel 4 to the sum of the changes in the braking forces generated on the front wheel 3 and the rear wheel 4 in comparison with a case where the information on the up/down grade is the information on the state where the road has the low up/down grade.

As an example, the travel state information that is acquired by the acquisition section 54 includes information on a suspension damping degree that is generated on the wheel of the straddle-type vehicle 100. Such information may be the information on the suspension damping degree itself that is generated on the wheel, or may be information on another state amount (for example, a change amount of the pitch generated in the straddle-type vehicle 100, a parameter used for damping degree control of the suspension 5, or the like) that allows estimation of the suspension damping degree generated on the wheel. In the case where the information on the suspension damping degree is information on a state where the large suspension damping degree is generated on the front wheel 3, in the haptic motion, the haptic motion performing section 53 preferably sets the priority of the rear wheel 4 to be high in comparison with a case where the information on the suspension damping degree is information on a state where the small suspension damping degree is generated on the front wheel 3. Meanwhile, in the case where the information on the suspension damping degree is information on a state where the large suspension damping degree is generated on the rear wheel 4, in the haptic motion, the haptic motion performing section 53 preferably sets the priority of the front wheel 3 to be high in comparison with a case where the information on the suspension damping degree is information on a state where the small suspension damping degree is generated on the rear wheel 4.

That is, in the case where the haptic motion is the motion that changes the braking force of only one of the front wheel 3 and the rear wheel 4, and the information on the suspension damping degree is information on a state where the suspension damping degree that falls below a reference suspension damping degree is generated on the front wheel 3, the haptic motion performing section 53 only changes the braking force on the front wheel 3. In the case where the information on the suspension damping degree is information on a state where the suspension damping degree that exceeds the reference suspension damping degree is generated on the front wheel 3, the haptic motion performing section 53 only changes the braking force on the rear wheel 4. Meanwhile, in the case where the information on the suspension damping degree is information on a state where the suspension damping degree that falls below the reference suspension damping degree is generated on the rear wheel 4, the haptic motion performing section 53 only changes the braking force generated on the rear wheel 4. In the case where the information on the suspension damping degree is information on a state where the suspension damping degree that exceeds the reference suspension damping degree is generated on the rear wheel 4, the haptic motion performing section 53 only changes the braking force generated on the front wheel 3. In addition, in the case where the haptic motion is the motion that changes the braking forces of both of the front wheel 3 and the rear wheel 4, and the information on the suspension damping degree is the information on the state where the large suspension damping degree is generated on the front wheel 3, the haptic motion performing section 53 increases the ratio of the change in the braking force generated on the rear wheel 4 to the sum of the changes in the braking forces generated on the front wheel 3 and the rear wheel 4 in comparison with a case where the information on the suspension damping degree is the information on the state where the small suspension damping degree is generated on the front wheel 3. Meanwhile, in the case where the information on the suspension damping degree is the information on the state where the large suspension damping degree is generated on the rear wheel 4, the haptic motion performing section 53 increases the ratio of the change in the braking force generated on the front wheel 3 to the sum of the changes in the braking forces generated on the front wheel 3 and the rear wheel 4 in comparison with a case where the information on the suspension damping degree is the information on the state where the small suspension damping degree is generated on the rear wheel 4.

### <Operation of Rider-Assistance System>

A description will be made on operation of the rider-assistance system according to the embodiment.

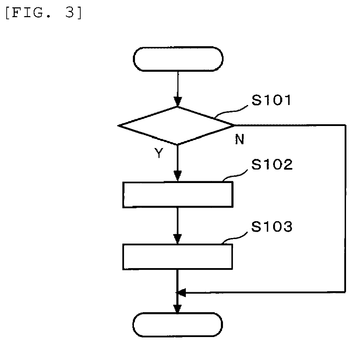

Fig. 3 is a chart illustrating an example of a control flow by the controller in the rider-assistance system according to the embodiment of the present invention.

The controller 51 repeatedly executes the control flow illustrated in Fig. 3 while the rider-assistance operation is valid and the straddle-type vehicle 100 travels.

### (Determination Step)

In step S101, the determination section 52 of the controller 51 determines the necessity of the warning that is given to the rider of the straddle-type vehicle 100. If the determination section 52 determines that the warning is necessary, the processing proceeds to step S102. If not, the processing returns to step S101.

### (Acquisition Step)

In step S102, the acquisition section 54 of the controller 51 acquires the travel state information of the straddle-type vehicle 100.

### (Haptic Motion Performing Step)

In step S103, the haptic motion performing section 53 of the controller 51 performs the haptic motion at least once to reduce or increase the acceleration/deceleration of the straddle-type vehicle 100 only for the moment. The haptic motion performing section 53 reduces or increases the acceleration/deceleration only for the moment by increasing or reducing the braking force on the wheel (the front wheel 3 or the rear wheel 4). Here, the haptic motion performing section 53 changes the priorities of the front wheel 3 and the rear wheel 4 at the time of increasing/reducing the braking force according to the travel state information that is acquired in step S102.

### <Effects of Rider-Assistance System>

A description will be made on effects of the rider-assistance system according to the embodiment.

In the rider-assistance system 50, the controller 51 includes: the determination section 52 that determines the necessity of the warning given to the rider of the straddle-type vehicle 100; and the haptic motion performing section 53 that performs the haptic motion at least once to reduce or increase the acceleration/deceleration of the straddle-type vehicle 100 only for the moment in the case where the determination section 52 determines that the warning is necessary. The controller 51 further includes the acquisition section 54 that acquires the travel state information of the straddle-type vehicle 100. The haptic motion performing section 53 changes the priority of each of the wheels (the front wheel 3 and the rear wheel 4) at the time of changing the braking force to reduce or increase the acceleration/deceleration only for the moment in the haptic motion according to the travel state information that is acquired by the acquisition section 54. Thus, even under a situation where travel safety of the straddle-type vehicle 100 can be deteriorated significantly by a slight change in the acceleration/deceleration, the haptic motion with the large change amount of the acceleration/deceleration can be performed by preferentially using the wheel that has less impact on the travel safety than the other wheel. Therefore, it is possible to improve the rider's perceptibility of the warning.

Preferably, the travel state information that is acquired by the acquisition section 54 includes the information on the acceleration/deceleration that is generated in the straddle-type vehicle 100. With such a configuration, even under a situation where the acceleration/deceleration that is generated in the straddle-type vehicle 100 is extremely low, the haptic motion with the large change amount of the acceleration/deceleration can be performed by preferentially using the front wheel 3 that has less impact on the travel safety (that is, that is less likely to be locked or to spin freely) than the other wheel. Therefore, it is possible to improve the rider's perceptibility of the warning. In addition, even under a situation where the acceleration/deceleration that is generated in the straddle-type vehicle 100 is extremely high, the haptic motion with the large change amount of the acceleration/deceleration can be performed by preferentially using the rear wheel 4 that has less impact on the travel safety (that is, that is less likely to be locked or to spin freely) than the other wheel. Therefore, it is possible to improve the rider's perceptibility of the warning.

Preferably, the travel state information that is acquired by the acquisition section 54 includes the information on the slip degree that is generated on the wheel (the front wheel 3 or the rear wheel 4) of the straddle-type vehicle 100. With such a configuration, the haptic motion with the large change amount of the acceleration/deceleration can be performed by preferentially using the different wheel from the wheel that actually has impact on the travel safety (that is, that is or is possibly locked, spins freely, or possibly spins freely). Therefore, it is possible to improve the rider's perceptibility of the warning.

Preferably, the travel state information that is acquired by the acquisition section 54 includes the information on the up/down grade of the road on which the straddle-type vehicle 100 travels. With such a configuration, even under a situation where the up/down grade of the road is extremely high, the haptic motion with the large change amount of the acceleration/deceleration can be performed by preferentially using the rear wheel 4 that has less impact on the travel safety (that is, that is less likely to be locked or to spin freely) than the other wheel. Therefore, it is possible to improve the rider's perceptibility of the warning. In addition, even under a situation where the up/down grade of the road is extremely low, the haptic motion with the large change amount of the acceleration/deceleration can be performed by preferentially using the front wheel 3 that has less impact on the travel safety (that is, that is less likely to be locked or to spin freely) than the other wheel. Therefore, it is possible to improve the rider's perceptibility of the warning.

Preferably, the travel state information that is acquired by the acquisition section 54 includes the information on the suspension damping degree that is generated on the wheel (the front wheel 3 or the rear wheel 4) of the straddle-type vehicle 100. With such a configuration, the haptic motion with the large change amount of the acceleration/deceleration can be performed by preferentially using the different wheel from the wheel that has significant impact on the travel safety (that is, that is likely to be locked or spin freely) due to the increase in the suspension damping degree. Therefore, it is possible to improve the rider's perceptibility of the warning.

The description has been made so far on the embodiment. However, the present invention is not limited to the description of the embodiment. The present invention is only limited within the scope of the appended claims.

### Reference Signs List

- 1:: Trunk
- 2:: Handlebar
- 3:: Front wheel
- 4:: Rear wheel
- 5:: Suspension
- 10:: Brake system
- 11:: Front-wheel brake mechanism
- 12:: Rear-wheel brake mechanism
- 13:: Brake lever
- 14:: Brake pedal
- 20:: Drive system
- 21:: Drive source
- 22:: Accelerator grip
- 30:: Gearshift system
- 31:: Multistage gearshift mechanism
- 50:: Rider-assistance system
- 51:: Controller
- 52:: Determination section
- 53:: Haptic motion performing section
- 54:: Acquisition section
- 100:: Straddle-type vehicle

## Claims

1. A controller (51) for a rider-assistance system (50) that is mounted to a straddle-type vehicle (100) including a front wheel (3) and a rear wheel (4), the controller comprising:
a determination section (52) that determines necessity of a warning that is given to a rider of the straddle-type vehicle (100) during travel of said straddle-type vehicle (100); and
a haptic motion performing section (53) that performs haptic motion at least once by reducing or increasing acceleration/deceleration of the straddle-type vehicle (100) only for a moment in the case where the determination section (52) determines that the warning is necessary, and further comprising:
an acquisition section (54) that acquires travel state information of the straddle-type vehicle (100) during the travel of said straddle-type vehicle (100), wherein
the travel state information is information with which appropriateness of each of the wheels for the haptic motion can be acknowledged, and
the haptic motion performing section (53) changes a priority of each of the wheels at the time of changing a braking force to reduce or increase the acceleration/deceleration only for the moment in the haptic motion according to the travel state information that is acquired by the acquisition section (54).

2. The controller according to claim 1, wherein
the haptic motion is motion that changes the braking force of only one of the front wheel (3) and the rear wheel (4), and
the haptic motion performing section (53) selects one of the front wheel (3) and the rear wheel (4), the braking force of which is to be changed in the haptic motion, according to the travel state information that is acquired by the acquisition section (54) and thereby changes the priority.

3. The controller according to claim 1, wherein
the haptic motion is motion that changes the braking forces of both of the front wheel (3) and the rear wheel (4), and
the haptic motion performing section (53) changes allocation of a change in the braking force generated on the front wheel (3) and a change in the braking force generated on the rear wheel (4) in the haptic motion according to the travel state information that is acquired by the acquisition section (54), and thereby changes the priority.

4. The controller according to any one of claims 1 to 3, wherein
the travel state information that is acquired by the acquisition section (54) includes information on the acceleration/deceleration that is generated in the straddle-type vehicle (100).

5. The controller according to claim 4, wherein
in the case where the information on the acceleration/deceleration is information on a state where the acceleration/deceleration that falls below reference acceleration/deceleration is generated in the straddle-type vehicle (100), in the haptic motion, the haptic motion performing section (53) sets the priority of the front wheel (3) to be high in comparison with a case where said information on the acceleration/deceleration is information on a state where the acceleration/deceleration that exceeds the reference acceleration/deceleration is generated in said straddle-type vehicle (100).

6. The controller according to any one of claims 1 to 5, wherein
the travel state information that is acquired by the acquisition section (54) includes information on a slip degree that is generated on the wheel of the straddle-type vehicle (100).

7. The controller according to claim 6, wherein
in the case where the information on the slip degree is information on a state where the large slip degree is generated on the front wheel (3), in the haptic motion, the haptic motion performing section (53) sets the priority of the rear wheel (4) to be high in comparison with a case where said information on the slip degree is information on a state where the small slip degree is generated on said the front wheel (3).

8. The controller according to claim 6, wherein
in the case where the information on the slip degree is information on a state where the large slip degree is generated on the rear wheel (4), in the haptic motion, the haptic motion performing section (53) sets the priority of the front wheel (3) to be high in comparison with a case where said information on the slip degree is information on a state where the small slip degree is generated on said rear wheel (4).

9. The controller according to any one of claims 1 to 8, wherein
the travel state information that is acquired by the acquisition section (54) includes information on an up/down grade of a road on which the straddle-type vehicle (100) travels.

10. The controller according to claim 9, wherein
in the case where the information on the up/down grade is information on a state where the road has the high up/down grade, in the haptic motion, the haptic motion performing section (53) sets the priority of the rear wheel (4) to be high in comparison with a case where said information on the up/down grade is information on a state where said road has the low up/down grade.

11. The controller according to any one of claims 1 to 10, wherein
the travel state information that is acquired by the acquisition section (54) includes information on a suspension damping degree that is generated on the wheel of the straddle-type vehicle (100).

12. The controller according to claim 11, wherein
in the case where the information on the suspension damping degree is information on a state where the large suspension damping degree is generated on the front wheel (3), in the haptic motion, the haptic motion performing section (53) sets the priority of the rear wheel (4) to be high in comparison with a case where said information on the suspension damping degree is information on a state where the small suspension damping degree is generated on said front wheel (3).

13. The controller according to claim 11, wherein
in the case where the information on the suspension damping degree is information on a state where the large suspension damping degree is generated on the rear wheel (4), in the haptic motion, the haptic motion performing section (53) sets the priority of the front wheel (3) to be high in comparison with a case where said information on the suspension damping degree is information on a state where the small suspension damping degree is generated on said rear wheel (4).

14. The controller according to any one of claims 1 to 13, wherein
in the haptic motion, the haptic motion performing section (53) controls at least one of a brake system (10), a drive system (20), and a gearshift system (30) of the straddle-type vehicle (100) so as to change the braking force.

15. A control method for a rider-assistance system (50) that is mounted to a straddle-type vehicle (100) including a front wheel (3) and a rear wheel (4), the control method comprising:
a determination step (S101) in which a determination section (52) of a controller (51) determines necessity of a warning that is given to a rider of the straddle-type vehicle (100) during travel of said straddle-type vehicle (100); and
a haptic motion performing step (S103) in which a haptic motion performing section (53) of the controller (51) performs haptic motion at least once by reducing or increasing acceleration/deceleration of the straddle-type vehicle (100) only for a moment in the case where it is determined in the determination step (S101) that the warning is necessary, and further comprising:
an acquisition step (S102) in which an acquisition section (54) of the controller (51) acquires travel state information of the straddle-type vehicle (100) during the travel of said straddle-type vehicle (100), wherein
the travel state information is information with which appropriateness of each of the wheels for the haptic motion can be acknowledged, and
in the haptic motion performing step (S103), the haptic motion performing section (53) changes a priority of each wheel at the time of changing a braking force to reduce or increase the acceleration/deceleration only for the moment in the haptic motion according to the travel state information that is acquired in the acquisition step (S102).

## Patentansprüche

1. Steuerung (51) für ein Fahrerassistenzsystem (50), das an einem Grätschsitzfahrzeug (100) montiert ist, das ein Vorderrad (3) und ein Hinterrad (4) umfasst, wobei die Steuerung Folgendes umfasst:
einen Bestimmungsabschnitt (52), der ein Erfordernis einer Warnung bestimmt, die an einen Fahrer des Grätschsitzfahrzeugs (100) während einer Fahrt des Grätschsitzfahrzeugs (100) ausgegeben wird; und
einen Abschnitt (53) zum Durchführen einer haptischen Bewegung, der mindestens einmal eine haptische Bewegung durch Verringern oder Erhöhen einer Beschleunigung/Verzögerung des Grätschsitzfahrzeugs (100) nur für einen Augenblick durchführt, falls der Bestimmungsabschnitt (52) bestimmt, dass die Warnung erforderlich ist, und ferner Folgendes umfassend:
einen Erfassungsabschnitt (54), der Fahrzustandsinformationen des Grätschsitzfahrzeugs (100) während der Fahrt des Grätschsitzfahrzeugs (100) erfasst, wobei
die Fahrzustandsinformation Informationen sind, mit denen die Eignung jedes der Räder für die haptische Bewegung bestätigt werden kann, und
der Abschnitt (53) zum Durchführen einer haptischen Bewegung eine Priorität jedes der Räder zum Zeitpunkt eines Änderns einer Bremskraft zum Verringern oder Erhöhen der Beschleunigung/Verzögerung nur für den Augenblick in der haptischen Bewegung gemäß den Fahrzustandsinformationen ändert, die durch den Erfassungsabschnitt (54) erfasst werden.

2. Steuerung nach Anspruch 1, wobei
die haptische Bewegung eine Bewegung ist, die die Bremskraft nur eines des Vorderrads (3) und des Hinterrads (4) ändert, und
der Abschnitt (53) zum Durchführen einer haptischen Bewegung eines aus dem Vorderrad (3) und dem Hinterrad (4), dessen Bremskraft in der haptischen Bewegung geändert werden soll, gemäß den Fahrzustandsinformationen auswählt, die durch den Erfassungsabschnitt (54) erfasst werden, und dadurch die Priorität ändert.

3. Steuerung nach Anspruch 1, wobei
die haptische Bewegung eine Bewegung ist, die die Bremskräfte sowohl des Vorderrads (3) als auch des Hinterrads (4) ändert, und
der Abschnitt (53) zum Durchführen einer haptischen Bewegung eine Zuweisung einer Änderung der Bremskraft, die an dem Vorderrad (3) erzeugt wird, und einer Änderung der Bremskraft, die an dem Hinterrad (4) erzeugt wird, in der haptischen Bewegung gemäß den Fahrzustandsinformationen auswählt, die durch den Erfassungsabschnitt (54) erfasst werden, und dadurch die Priorität ändert.

4. Steuerung nach einem der Ansprüche 1 bis 3, wobei die Fahrzustandsinformationen, die durch den Erfassungsabschnitt (54) erfasst werden, Informationen über die Beschleunigung/Verzögerung, die in dem Grätschsitzfahrzeug (100) erzeugt wird, umfasst.

5. Steuerung nach Anspruch 4, wobei
in dem Fall, in dem die Informationen über die Beschleunigung/Verzögerung Informationen über einen Zustand sind, in dem die Beschleunigung/Verzögerung, die unter die Referenzbeschleunigung/-verzögerung fällt, in dem Grätschsitzfahrzeug (100) erzeugt wird, in der haptischen Bewegung, der Abschnitt (53) zum Durchführen einer haptischen Bewegung die Priorität des Vorderrads (3) als hoch festlegt im Vergleich zu einem Fall, in dem die Informationen über die Beschleunigung/Verzögerung Informationen über einen Zustand sind, in dem die Beschleunigung/Verzögerung, die die Referenzbeschleunigung/Verzögerung überschreitet, in dem Grätschsitzfahrzeug (100) erzeugt wird.

6. Steuerung nach einem der Ansprüche 1 bis 5, wobei die Fahrzustandsinformationen, die durch den Erfassungsabschnitt (54) erfasst werden, Informationen über einen Schlupfgrad umfassen, der an dem Rad des Grätschsitzfahrzeugs (100) erzeugt wird.

7. Steuerung nach Anspruch 6, wobei
in dem Fall, in dem die Informationen über den Schlupfgrad Informationen über einen Zustand sind, in dem der große Schlupfgrad an dem Vorderrad (3) erzeugt wird, der Abschnitt zum Durchführen einer haptischen Bewegung (53) die Priorität des Hinterrads (4) als hoch festlegt im Vergleich zu einem Fall, in dem die Informationen über den Schlupfgrad Informationen über einen Zustand sind, in dem der kleine Schlupfgrad an dem Vorderrad (3) erzeugt wird.

8. Steuerung nach Anspruch 6, wobei
in dem Fall, in dem die Informationen über den Schlupfgrad Informationen über einen Zustand sind, in dem der große Schlupfgrad an dem Hinterrad (4) erzeugt wird, der Abschnitt (53) zum Durchführen einer haptischen Bewegung die Priorität des Vorderrads (3) als hoch festlegt im Vergleich zu einem Fall, in dem die Informationen über den Schlupfgrad Informationen über einen Zustand sind, in dem der kleine Schlupfgrad an dem Hinterrad (4) erzeugt wird.

9. Steuerung nach einem der Ansprüche 1 bis 8, wobei die Fahrzustandsinformationen, die durch den Erfassungsabschnitt (54) erfasst werden, Informationen über Steigung/Gefälle einer Straße sind, auf der das Grätschsitzfahrzeug (100) fährt.

10. Steuerung nach Anspruch 9, wobei
in dem Fall, in dem die Informationen über Steigung/Gefälle Informationen über einen Zustand sind, in dem die Straße, in der haptischen Bewegung, die/das hohe Steigung/Gefälle aufweist, der Abschnitt zum Durchführen einer haptischen Bewegung (53) die Priorität des Hinterrads (4) als hoch festgelegt im Vergleich zu einem Fall, in dem die Informationen über die Steigung/Gefälle Informationen über einen Zustand sind, in dem die Straße die/das niedrige Steigung/Gefälle aufweist.

11. Steuerung nach einem der Ansprüche 1 bis 10, wobei die Fahrzustandsinformationen, die durch den Erfassungsabschnitt (54) erfasst werden, Informationen über einen Federungsdämpfungsgrad umfassen, der an dem Rad des Grätschsitzfahrzeugs (100) erzeugt wird.

12. Steuerung nach Anspruch 11, wobei
in dem Fall, in dem die Informationen über den Federungsdämpfungsgrad Informationen über einen Zustand sind, in dem der große Federungsdämpfungsgrad an dem Vorderrad (3) erzeugt wird, in der haptischen Bewegung, Abschnitt zum Durchführen einer haptischen Bewegung (53) die Priorität des Hinterrads (4) als hoch festlegt im Vergleich zu einem Fall, in dem die Informationen über den Federungsdämpfungsgrad Informationen über einen Zustand sind, in dem der kleine Federungsdämpfungsgrad an dem Vorderrad (3) erzeugt wird.

13. Steuerung nach Anspruch 11, wobei
in dem Fall, in dem die Informationen über den Federungsdämpfungsgrad Informationen über einen Zustand sind, in dem der große Federungsdämpfungsgrad an dem Hinterrad (4) erzeugt wird, in der haptischen Bewegung, Abschnitt zum Durchführen einer haptischen Bewegung (53) die Priorität des Vorderrads (3) als hoch festlegt im Vergleich zu einem Fall, in dem die Informationen über den Federungsdämpfungsgrad Informationen über einen Zustand sind, in dem der kleine Federungsdämpfungsgrad an dem Hinterrad (4) erzeugt wird.

14. Steuerung nach einem der Ansprüche 1 bis 13, wobei der Abschnitt (53) zum Durchführen einer haptischen Bewegung in der haptischen Bewegung mindestens eines aus einem Bremssystem (10), einem Antriebssystem (20) und einem Gangschaltungssystem (30) des Grätschsitzfahrzeugs (100) steuert, um die Bremskraft zu ändern.

15. Steuerverfahren für ein Fahrerassistenzsystem (50), das an einem Grätschsitzfahrzeug (100) montiert ist, das ein Vorderrad (3) und ein Hinterrad (4) umfasst, wobei das Verfahren Folgendes umfasst:
einen Bestimmungsschritt (S101), in dem ein Bestimmungsabschnitt (52) einer Steuerung (51) ein Erfordernis einer Warnung bestimmt, die an einen Fahrer des Grätschsitzfahrzeugs (100) während einer Fahrt des Grätschsitzfahrzeugs (100) ausgegeben wird; und
einen Schritt (S103) zum Durchführen einer haptischen Bewegung, in dem ein Abschnitt (53) zum Durchführen einer haptischen Bewegung der Steuerung (51) mindestens einmal eine haptische Bewegung durchführt durch Verringern oder Erhöhen einer Beschleunigung/Verzögerung des Grätschsitzfahrzeugs (100) nur für einen Augenblick, wenn in dem Bestimmungsschritt (S101) bestimmt wird, dass die Warnung erforderlich ist, und ferner Folgendes umfassend:
einen Erfassungsschritt (S102), in dem ein Erfassungsabschnitt (54) der Steuerung (51) Fahrzustandsinformationen des Grätschsitzfahrzeugs (100) während der Fahrt des Grätschsitzfahrzeugs (100) erfasst, wobei
die Fahrzustandsinformation Informationen sind, mit denen die Eignung jedes der Räder für die haptische Bewegung bestätigt werden kann, und
in dem Schritt (S103) zum Durchführen einer haptischen Bewegung der Abschnitt (53) zum Durchführen einer haptischen Bewegung eine Priorität jedes Rades zum Zeitpunkt eines Änderns einer Bremskraft zum Verringern oder Erhöhen der Beschleunigung/Verzögerung nur für den Augenblick in der haptischen Bewegung gemäß den Fahrzustandsinformationen, die im Erfassungsschritt (S102) erfasst werden, ändert.

## Revendications

1. Dispositif de commande (51) destiné à un système d'assistance au conducteur (50) qui équipe un véhicule de type à enfourcher (100) comprenant une roue avant (3) et une roue arrière (4), le dispositif de commande comprenant :
une section de détermination (52) qui détermine la nécessité d'un avertissement qui est donné à un conducteur du véhicule de type à enfourcher (100) pendant le déplacement dudit véhicule de type à enfourcher (100) ; et
une section de réalisation de mouvement haptique (53) qui réalise un mouvement haptique au moins une fois pour réduire ou accroître une accélération/décélération du véhicule de type à enfourcher (100) seulement pendant un moment dans le cas où la section de détermination (52) détermine que l'avertissement est nécessaire, et comprenant en outre :
une section d'acquisition (54) qui acquiert des informations d'état de déplacement du véhicule de type à enfourcher (100) pendant le déplacement dudit véhicule de type à enfourcher (100),
les informations d'état de déplacement étant des informations permettant de reconnaître l'adéquation de chacune des roues au mouvement haptique, et
la section de réalisation de mouvement haptique (53) modifiant une priorité de chacune des roues au moment de modifier une force de freinage afin de réduire ou d'augmenter l'accélération/décélération seulement pendant le moment lors du mouvement haptique en fonction des informations d'état de déplacement acquises par la section d'acquisition (54).

2. Dispositif de commande selon la revendication 1,
le mouvement haptique étant un mouvement qui modifie la force de freinage d'une seule roue parmi la roue avant (3) et la roue arrière (4), et
la section de réalisation de mouvement haptique (53) sélectionnant une roue parmi la roue avant (3) et la roue arrière (4), dont la force de freinage doit être modifiée lors du mouvement haptique, en fonction des informations d'état de déplacement qui sont acquises par la section d'acquisition (54) et modifiant ainsi la priorité.

3. Dispositif de commande selon la revendication 1,
le mouvement haptique étant un mouvement qui modifie les forces de freinage à la fois de la roue avant (3) et de la roue arrière (4), et
la section de réalisation de mouvement haptique (53) modifiant la répartition d'une modification de la force de freinage générée sur la roue avant (3) et d'une modification de la force de freinage générée sur la roue arrière (4) lors du mouvement haptique en fonction des informations d'état de déplacement qui sont acquises par la section d'acquisition (54), et modifiant ainsi la priorité.

4. Dispositif de commande selon l'une quelconque des revendications 1 à 3,
les informations d'état de déplacement acquises par la section d'acquisition (54) comprenant des informations sur l'accélération/décélération générée dans le véhicule de type à enfourcher (100).

5. Dispositif de commande selon la revendication 4, dans le cas où les informations d'accélération/décélération sont des informations d'un état où l'accélération/décélération inférieure à l'accélération/décélération de référence est générée dans le véhicule de type à enfourcher (100), lors du mouvement haptique, la section de réalisation de mouvement haptique (53) définissant la priorité de la roue avant (3) pour qu'elle soit élevée par rapport à un cas où lesdites informations sur l'accélération/décélération sont des informations sur un état où l'accélération/décélération qui dépasse l'accélération/décélération de référence est générée dans ledit véhicule de type à enfourcher (100).

6. Dispositif de commande selon l'une quelconque des revendications 1 à 5,
les informations d'état de déplacement acquises par la section d'acquisition (54) comprenant des informations sur un degré de glissement généré sur la roue du véhicule de type à enfourcher (100).

7. Dispositif de commande selon la revendication 6, dans le cas où les informations sur le degré de glissement sont des informations sur un état où le degré de glissement important est généré sur la roue avant (3), lors du mouvement haptique, la section de réalisation de mouvement haptique (53) définissant la priorité de la roue arrière (4) pour qu'elle soit élevée par rapport à un cas où lesdites informations sur le degré de glissement important sont des informations sur un état où le faible degré de glissement est généré sur ladite roue avant (3).

8. Dispositif de commande selon la revendication 6, dans le cas où les informations sur le degré de glissement sont des informations sur un état où le degré de glissement important est généré sur la roue arrière (4), lors du mouvement haptique, la section de réalisation de mouvement haptique (53) définissant la priorité de la roue avant (3) pour qu'elle soit élevée par rapport à un cas où lesdites informations sur le degré de glissement important sont des informations sur un état où le faible degré de glissement est généré sur ladite roue arrière (4).

9. Dispositif de commande selon l'une quelconque des revendications 1 à 8,
les informations d'état de déplacement acquises par la section d'acquisition (54) comprenant des informations sur une pente ascendante/descendante d'une route sur laquelle le véhicule de type à enfourcher (100) se déplace.

10. Dispositif de commande selon la revendication 9, dans le cas où les informations sur la pente ascendante/descendante sont des informations sur un état où la route a la pente ascendante/descendante élevée, lors du mouvement haptique, la section de réalisation de mouvement haptique (53) définissant la priorité de la roue arrière (4) pour qu'elle soit élevée par rapport à un cas où lesdites informations sur la pente ascendante/descendante sont des informations sur un état où ladite route a la pente ascendante/descendante faible.

11. Dispositif de commande selon l'une quelconque des revendications 1 à 10,
les informations d'état de déplacement acquises par la section d'acquisition (54) comprenant des informations sur un degré d'amortissement de suspension généré sur la roue du véhicule de type à enfourcher (100).

12. Dispositif de commande selon la revendication 11, dans le cas où les informations sur le degré d'amortissement de suspension sont des informations sur un état où le degré d'amortissement de suspension important est généré sur la roue avant (3), lors du mouvement haptique, la section de réalisation de mouvement haptique (53) définissant la priorité de la roue arrière (4) pour qu'elle soit élevée par rapport à un cas où lesdites informations sur le degré d'amortissement de suspension sont des informations sur un état où le faible degré d'amortissement de suspension est généré sur ladite roue avant (3).

13. Dispositif de commande selon la revendication 11, dans le cas où les informations sur le degré d'amortissement de suspension sont des informations sur un état où le degré d'amortissement de suspension important est généré sur la roue arrière (4), lors du mouvement haptique, la section de réalisation de mouvement haptique (53) définissant la priorité de la roue avant (3) pour qu'elle soit élevée par rapport à un cas où lesdites informations sur le degré d'amortissement de suspension sont des informations sur un état où le faible degré d'amortissement de suspension est généré sur ladite roue arrière (4).

14. Dispositif de commande selon l'une quelconque des revendications 1 à 13,
lors du mouvement haptique, la section de réalisation de mouvement haptique (53) commandant au moins un système parmi un système de freinage (10), un système de propulsion (20) et un système de changement de vitesses (30) du véhicule de type à enfourcher (100) de façon à modifier la force de freinage.

15. Procédé de commande d'un système d'assistance au conducteur (50) qui équipe un véhicule de type à enfourcher (100) comprenant une roue avant (3) et une roue arrière (4), le procédé de commande comprenant :
une étape (S101) de détermination lors de laquelle une section de détermination (52) d'un dispositif de commande (51) détermine la nécessité d'un avertissement qui est donné à un conducteur du véhicule de type à enfourcher (100) pendant le déplacement dudit véhicule de type à enfourcher (100) ; et
une étape de réalisation de mouvement haptique (S103) lors de laquelle une section de réalisation de mouvement haptique (53) du dispositif de commande (51) réalise un mouvement haptique au moins une fois par réduction ou augmentation d'une accélération/décélération du véhicule de type à enfourcher (100) seulement pendant un moment dans le cas où il est déterminé lors de l'étape (S101) de détermination que l'avertissement est nécessaire, et comprenant en outre :
une étape d'acquisition (S102) à laquelle une unité d'acquisition (54) du dispositif de commande (51) acquiert des informations d'état de déplacement du véhicule de type à enfourcher (100) pendant le déplacement dudit véhicule de type à enfourcher (100), les informations d'état de déplacement étant des informations permettant de reconnaître l'adéquation de chacune des roues au mouvement haptique, et
lors de l'étape de réalisation de mouvement haptique (S103), la section de réalisation de mouvement haptique (53) modifiant une priorité de chaque roues au moment de modifier une force de freinage pour réduire ou accroître l'accélération/la décélération seulement pendant le moment lors du mouvement haptique en fonction des informations d'état de déplacement qui sont acquises pendant l'étape d'acquisition (S102).
